Europäisches Patentamt

European Patent Office

Office européen des brevets

(11) Veröffentlichungsnummer: **0 357 884**
**A1**

## (12) EUROPÄISCHE PATENTANMELDUNG

(21) Anmeldenummer: **89110052.1**

(22) Anmeldetag: **02.06.89**

(51) Int. Cl.5: **B23K 9/10**

(30) Priorität: **05.09.88 DE 8811216 U**

(43) Veröffentlichungstag der Anmeldung:
**14.03.90 Patentblatt 90/11**

(84) Benannte Vertragsstaaten:
**AT BE CH DE ES FR GB GR IT LI LU NL SE**

(71) Anmelder: **MESSER GRIESHEIM GMBH**
**Hanauer Landstrasse 330**
**D-6000 Frankfurt/Main(DE)**

(72) Erfinder: **Werner, Maximilian**
**Henschelring 7**
**D-8011 Kirchheim(DE)**

(54) **Elektro-Schweissgerät.**

(57) Bei einem Elektro-Schweißgerät mit einem Drehstromtransformator und drei steuerbaren Gleichrichtern sind auf der Sekundärseite des Transformators (T) der Wicklungsanfang (A) von zwei Schenkeln (1, 2) mit dem Wicklungsende (E) des dritten Schenkels (3) zu einem Sternpunkt zusammengefaßt, der gleichzeitig einen Ausgangspol (4) bildet. Die Wicklungsenden (E) der ersten beiden Schenkel (1, 2) sind jeweils mit der Anode bzw. Kathode des ersten und zweiten steuerbaren Gleichrichters (5, 6) verbunden. Der Wicklungsanfang (A) des dritten Schenkels (3) ist mit der Kathode bzw. Anode des dritten steuerbaren Gleichrichters (7) verbunden. Die jeweils anderen Elektroden der steuerbaren Gleichrichter (5, 6, 7) sind zusammengeschaltet und mit dem zweiten Ausgangspol (8) verbunden.

FIG.1

EP 0 357 884 A1

Die Erfindung bezieht sich auf ein Elektro-Schweißgerät der im Oberbegriff des Schutzanspruchs 1 genannten Art.

Derartige Elektro-Schweißgeräte ermöglichen nicht nur eine Gleichstrom-Schweißung, sondern auch eine Wechselstrom-Schweißung, die z.B. zum Schweißen von Aluminiumteilen erforderlich ist, da bei diesen die sich jeweils bildende Oxydhaut mit Hilfe von Wechselstrom aufgerissen werden muß. Wird ein solches Schweißgerät von einem Drehstromnetz gespeist, tritt eine unsymmetrische Belastung des Drehstromnetzes auf.

Aufgabe der Erfindung ist es, ein Elektro-Schweißgerät der im Oberbegriff des Schutzanspruchs 1 genannten Art so auszubilden, daß trotz der Erzeugung eines unsymmetrischen Schweiß-Wechselstroms eine symmetrische Belastung des Drehstromnetzes sichergestellt ist.

Bei einem Elektro-Schweißgerät der genannten Art ist diese Aufgabe durch die im kennzeichnenden Teil des Schutzanspruchs 1 genannten Merkmale gelöst.

Durch diese besondere Verbindung der die drei Schenkel bildenden Wicklungen der Sekundärseite des Transformators sowohl miteinander als auch mit den drei steuerbaren Gleichrichtern werden zur Bildung des unsymmetrischen Schweiß-Wechselstroms zwei Phasen des Drehstomnetzes nur mit ihrem Minusanteil und die dritte Phase nur mit ihrem Plusanteil herangezogen. Dadurch wird eine symmetrische Belastung des Drehstromnetzes erreicht.

Ausführungsbeispiele der Erfindung werden anhand der Zeichnung erläutert. Im einzelnen zeigt.

Fig. 1 die prinzipielle Verbindung der drei Wicklungen der Sekundärseite des Transformators untereinander und mit den zugeordneten Gleichrichtern,

Fig. 2 ein praktisches Ausführungsbeispiel, bei dem diese prinzipielle Verbindung in einer Schweißstromquelle für das WIG-Schweißen wahlweise mit Gleich- oder Wechselstrom realisiert ist, und

Fig. 3 den Verlauf des unsymmetrischen Schweiß-Wechselstroms.

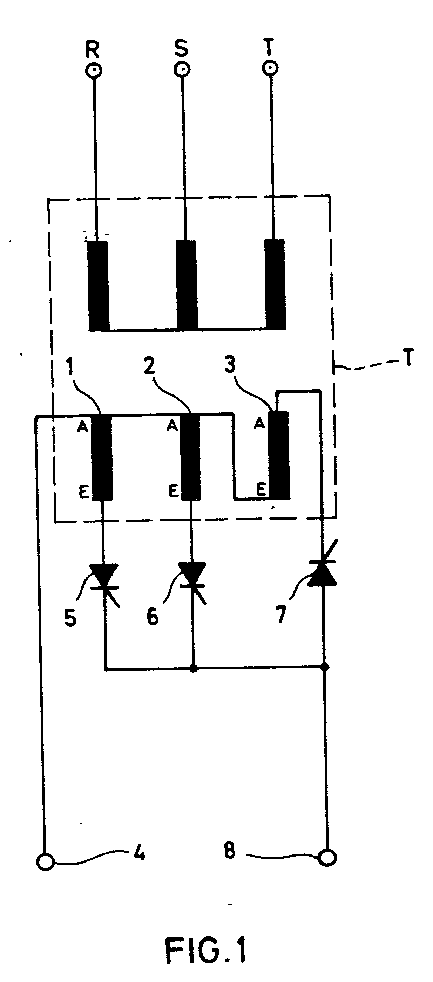

In Fig. 1 ist ein Drehstomtransformator T gezeigt, dessen Primärseite mit den drei Phasen RST eines üblichen Drehstromnetzes verbunden ist. Die drei Wicklungen bzw. Schenkel 1, 2 and 3 auf der Sekundärseite des Drehstromtransformators T sind so miteinander verbunden, daß die Wicklungsanfänge A der ersten und zweiten Wicklung miteinander und mit dem Wicklungsende der dritten Wicklung 3 zu einem Sternpunkt zusammengeschaltet sind. Die Wicklungsenden der ersten und zweiten Wicklungen 1 und 2 sind jeweils mit den Anoden der ihnen zugeordneten steuerbaren Gleichrichter 5 und 6 verbunden. Der Wicklungsanfang A der dritten Wicklung 3 ist mit der Kathode des dieser Wicklung zugeordneten steuerbaren Gleichrichters 7 verbunden. Die Kathoden der ersten und zweiten steuerbaren Gleichrichter 5 und 6 sind miteinander und mit der Anode des dritten steuerbaren Gleichrichters 7 verbunden, wobei dieser Verbindungspunkt gleichzeitig mit dem mit dem jeweils zu schweißenden Werkstück zu verbindenden Ausgangspol 8 verbunden ist. Der mit der Schweißelektrode zu verbindende Ausgangspol 4 ist mit dem Sternpunkt der Sekundärseite des Drehstromtransformators verbunden. Die bei diesem prinzipiellen Ausführungsbeispiel gezeigte Durchlaßrichtung der steuerbaren Gleichrichter kann auch jeweils umgekehrt werden, so daß dann die ersten und zwei ten steuerbaren Gleichrichter 5 und 6 jeweils mit ihrer Kathode mit den Wicklungsenden der ersten und zweiten Wicklungen 1 und 2 verbunden sind und der dritte steuerbare Gleichrichter 7 mit seiner Anode mit dem Wicklungsanfang A der dritten Wicklung 3 verbunden ist.

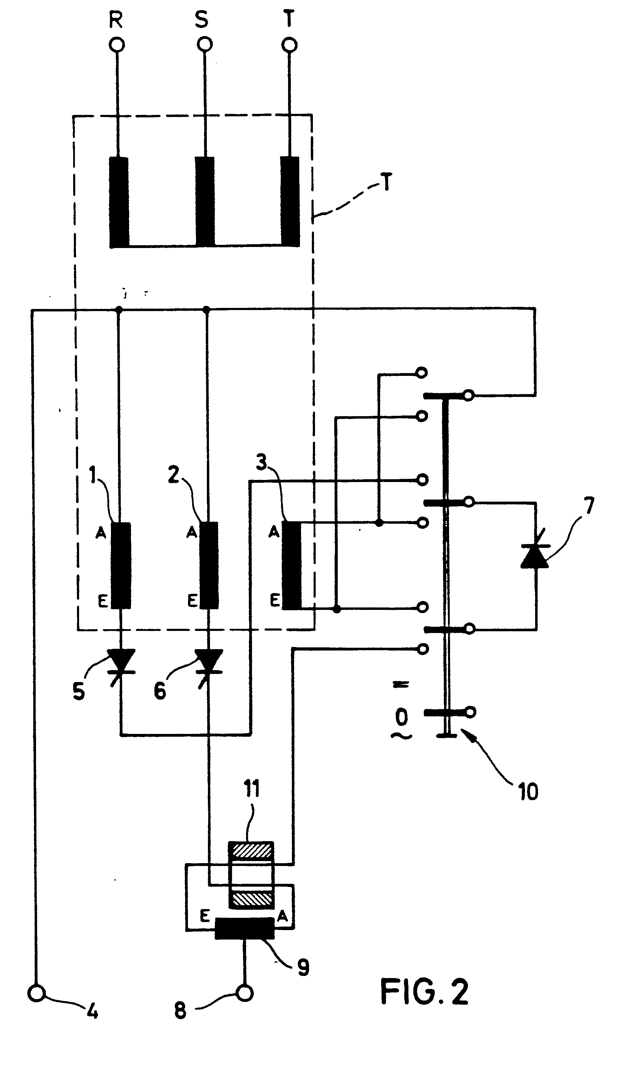

Wie dieses in Fig. 2 gezeigt ist, in der gleiche Bezugszeichen die gleichen Bauteile wie in der Fig. 1 bezeichnen, sind die Kathoden der ersten und zweiten steuerbaren Gleichrichter 5 und 6 über einen Gleichstromwandler 11 mit dem Wicklungsanfang A einer Drossel 9 verbunden, deren Wicklungsende E mit der Anode des dritten steuerbaren Gleichrichters 7 verbunden ist. Bei dem in Fig. 2 gezeigten Ausführungsbeispiel ist ein drei Umschaltkontakte aufweisender Schalter 10 vorgesehen, der aus einer Ruhestellung in eine Betriebsstellung für das Wechselstrom-Schweißen und eine weitere Betriebsstellung für das Gleichstrom-Schweißen umgeschaltet werden kann. In der Betriebsstellung für das Wechselstrom-Schweißen stellt der Schalter 10 die in Fig. 1 gezeigte prinzipielle Verbindung der Wicklungen der Sekundärseite des Transformators T und der ihnen zugeordneten steuerbaren Gleichrichter her. Der mit dem Werkstück zu verbindende Ausgangspol 8 ist mit einer Anzapfung der Drossel 9 verbunden.

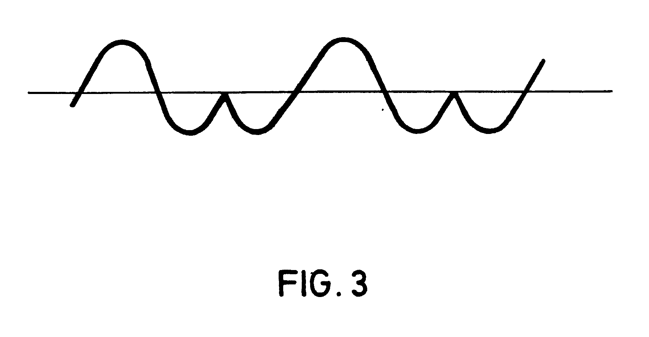

In Fig. 3 ist der unsymmetrische Schweiß-Wechselstrom in seinem zeitlichen Verlauf dargestellt, wobei deutlich zu erkennen ist, daß der Minusanteil dieses Wechselstroms aus zwei Phase des Drehstromnetzes und der Plusanteil aus der verbleibenden anderen Phase des Drehstromnetzes entnommen wird. Auf diese Weise wird eine symmetrische Belastung des Drehstromnetzes erreicht. Wie aus Fig. 2 zu erkennen ist, sind die mit dem Wicklungsanfang und dem Wicklungsende der Drossel 9 jeweils verbundenen Zuleitungen gegenläufig durch den Gleichstromwandler 11 hindurchgesteckt.

**Ansprüche**

1. Elektro-Schweißgerät mit einem Drehstromtransformator und drei steuerbaren Gleichrichtern, **dadurch gekennzeichnet,** daß auf der Sekundärseite des Transformators (T) der Wicklungsanfang (A) von zwei Schenkeln (1, 2) mit dem Wicklungsende (E) des dritten Schenkels (3) zu einem Sternpunkt zusammengeschaltet sind, der gleichzeitig einen Ausgangspol (4) bildet, daß die Wicklungsenden (E) der ersten beiden Schenkel (1, 2) jeweils mit der Anode bzw. Kathode des ersten und zweiten steuerbaren Gleichrichters (5, 6) verbunden sind, während der Wicklungsanfang (A) des dritten Schenkels (3) mit der Kathode bzw. Anode des dritten steuerbaren Gleichrichters (7) verbunden ist, und daß die jeweils anderen Elektroden der steuerbaren Gleichrichter (5, 6, 7) zusammengeschaltet und mit dem zweiten Ausgangspol (8) verbunden sind.

2. Elektro-Schweißgerät nach Anspruch 1, **dadurch gekennzeichnet,** daß die anderen Elektroden des ersten und zweiten steuerbaren Gleichrichters (5, 6) unmittelbar miteinander und mit dem Wicklungsanfang (A) einer Drossel (9) verbunden sind, während die andere Elektrode des dritten, gegensinnig angeschlossenen steuerbaren Gleichrichters (7) mit dem Wicklungsende (E) der Drosel (9) verbunden ist, und daß der zweite Ausgangspol (8) an eine Anzapfung der Drossel (9) angeschlossen ist.

R    S    T

1    2    3

A    A    A

E    E    E

T

5    6    7

4    8

FIG.1

FIG. 2

FIG. 3

## EINSCHLÄGIGE DOKUMENTE

EP 89110052.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl.) 5 |
|---|---|---|---|
| Y | <u>FR - A - 929 140</u><br>(TESTUZ)<br>  * Seite 1, Zeilen 26-34;<br>    Seite 2, Zeilen 83-88;<br>    Anspruch 4; Fig. 3 *<br>       -- | 1 | B 23 K 9/10 |
| Y | <u>GB - A - 1 152 002</u><br>(WELDING INSTITUTE)<br>  * Seite 8, Zeilen 64-123;<br>    Fig. 3 *<br>       -- | 1 | |
| A | <u>DD - A - 14 303</u><br>(KRUSCHE)<br>  * Seite 1, Zeilen 1-6 *<br>       -- | 1 | |
| A | <u>DE - B - 1 058 167</u><br>(SIEMENS)<br>  * Spalte 3, Zeilen 24-56;<br>    Fig. 3 *<br>       ---- | 1,2 | |

**RECHERCHIERTE SACHGEBIETE (Int. Cl.) 5**

B 23 K 9/00
H 01 F 33/00
H 02 M 5/00
H 05 B 7/00

Der vorliegende Recherchenbericht wurde für alle Patentansprüche erstellt.

| Recherchenort | Abschlußdatum der Recherche | Prüfer |
|---|---|---|
| WIEN | 27-09-1989 | KUTZELNIGG |